# EUROPEAN PATENT SPECIFICATION

(11) **EP 1 985 354 B1**
(45) Date of publication and mention of the grant of the patent: **11.07.2012**
(21) Application number: 08154619.4
(22) Date of filing: 16.04.2008
(51) Int. Cl.: B01D 53/94, B01J 21/06, B01J 23/00, B01J 23/10, B01J 23/44, B01J 35/00, B01J 35/04, B01J 37/02, B01J 37/03, F01N 3/28

(54) **Exhaust gas purification catalyst and manufacturing method thereof**
Abgasreinigungskatalysator und Herstellungsverfahren dafür
Catalyseur de purification de gaz d'échappement et son procédé de fabrication

(30) Priority: 27.04.2007 JP 2007118105; 28.02.2008 JP 2008048163
(43) Date of publication of application: 29.10.2008
(73) Proprietor: Mazda Motor Corporation, Aki-gun Hiroshima 730-8670 (JP)
(72) Inventor: Minoshima, Koji, Aki-gun Hiroshima 730-8670 (JP); Miyoshi, Seiji, Aki-gun Hiroshima 730-8670 (JP); Iwakuni, Hideharu, Aki-gun Hiroshima 730-8670 (JP); Takami, Akihide, Aki-gun Hiroshima 730-8670 (JP); Sumida, Hirosuke, Aki-gun Hiroshima 730-8670 (JP)
(74) Representative: Thoma, Michael

(56) References cited:
- EP-A- 1 704 910
- EP-A- 1 900 416
- US-B1- 6 335 305
- KOLLI ET AL: "The effect of barium on the catalytic behaviour of fresh and aged Pd-Ba-OSC/Al2O3 catalysts" APPLIED CATALYSIS A: GENERAL, ELSEVIER SCIENCE, AMSTERDAM, NL, vol. 298, 10 January 2006 (2006-01-10), pages 65-72, XP005200166 ISSN: 0926-860X
- MASAHIRO SUGIURA: "Oxygen Storage Materials for Automotive Catalysts: Ceria-Zirconia Solid Solutions" CATALYSIS SURVEYS FROM ASIA, KLUWER ACADEMIC PUBLISHERS, DO, vol. 7, no. 1, 1 April 2003 (2003-04-01), pages 77-87, XP019275539 ISSN: 1574-9266

## Description

### BACKGROUND OF THE INVENTION

### (a) Field of the Invention

This invention relates to exhaust gas purification catalysts for converting exhaust gas from engines and methods for manufacturing such an exhaust gas purification catalyst.

### (b) Description of Related Art

Exhaust gas purification catalysts for converting exhaust gas from engines employ an oxygen storage component having oxygen storage/release capacity, such as ceria or a cerium-zirconium mixed oxide (composite oxide). When such an oxygen storage component is used for a three-way catalyst, it acts to expand the air-fuel ratio window (A/F window) of the catalyst, whereby hydrocarbons (HC), carbon monoxide (CO) and nitrogen oxides (NOx) can be converted even if the A/F ratio of exhaust gas deviates from the stoichiometric A/F ratio. Meanwhile, when such an oxygen storage component is used for an oxidation catalyst for a lean-bum diesel engine, it releases stored oxygen as active oxygen to enhance the catalyst performance.

Cerium-zirconium mixed oxides (Ce-Zr mixed oxides) are known to have higher thermal resistance than ceria but lower thermal resistance than alumina that is another material for an exhaust gas purification catalyst. "Having low thermal resistance" means that when the material is exposed to gas having a high temperature, for example, about 1000°C for a long time, its crystal structure changes, its specific surface area reduces or its particles agglomerate.

A solution to this problem is disclosed in Published Japanese Patent Applications Nos. 2000-271480 and 2005-224792. This solution is to add one or more rare earth metals other than Ce to a Ce-Zr mixed oxide, make a composite of alumina substantially indissoluble in ceria and the Ce-Zr-based mixed oxide and then post-carry one or more catalytic metals on the composite.

Alternatively, Published Japanese Patent Application No. H10-182155 discloses another solution in which an alkaline solution is added to a solution containing salts of a catalytic metal, aluminium (Al), Ce and Zr to coprecipitate these metal components and the obtained coprecipitate is dried and calcined to produce a mixed oxide containing the catalytic metal.

Meanwhile, Published Japanese Patent Application No. 2000-300989 discloses a technique that aqueous ammonia is added to a solution containing salts of Ce, Zr and palladium (Pd) to coprecipitate these metal components and the obtained coprecipitate is dried and calcined to produce a catalytically active substance, and additionally that powder of the catalytically active substance and alumina are loaded into deionized water and wet ground into a slurry and the obtained slurry is coated on a honeycomb support to form an exhaust gas purification catalyst.

In the catalysts disclosed in Published Japanese Patent Applications Nos. 2000-271480 and 2005-224792, since a catalytic metal is post-carried on the surface of the composite containing alumina, ceria and zirconia, a problem arises that the catalytic metal is sintered when exposed to high-temperature exhaust gas. In contrast, since in the catalyst disclosed in Published Japanese Patent Application No. H10-182155 a catalytic metal is coprecipitated with Al, Ce and Zr, the catalytic metal is chemically compounded into the obtained mixed oxide, which makes the catalytic metal hard to sinter.

However, the Inventor's closer inspection on the mixed oxide disclosed in Published Japanese Patent Application No. H10-182155 has revealed that if Pd disclosed in Published Japanese Patent Application No. 2000-300989 is employed as a catalytic metal for the mixed oxide, Pd exists on the surface of a Ce-Zr-based mixed oxide but not on the alumina surface (i.e., Pd fully dissolves in alumina and is not exposed at the alumina surface).

Therefore, Pd contained in alumina cannot effectively act as a catalyst. Hence, part of Pd is wasted and alumina simply acts to restrain, agglomeration of Ce-Zr mixed oxide particles and cannot be effectively used as a support material for carrying Pd thereon.

US 6,335,305 discloses a catalyst according to the preamble portion of claim 1. More particularly, it suggests to prepare a catalytic metal comprising oxygen storage component particles which contain Ce and Zr, and, furthermore, alumina particles, wherein Pd is doped in said oxygen storage component particles as well as in said alumina particles. Furthermore, EP 1 704 910 A shows a catalyst in a double layer structure, wherein the upper layer contains Rh and Pt supported by different particles, and the lower layer contains Pd supported by oxygen storage component particles and alumina particles.

### SUMMARY OF THE INVENTION

It is an objective of the present invention to achieve an enhanced oxygen storage/release capacity and an enhanced exhaust gas conversion performance.

This objective is achieved by a catalyst as defined in claim 1 and a method for manufacturing such a catalyst as defined in claim 6. Preferred embodiments of the invention are laid down in the dependent claims.

A solution taken in the present invention to attain the above object is to employ a metal oxide composite in which alumina and an oxygen storage component are made into a composite, chemically compound part of Pd as a catalytic metal into the oxygen storage component to expose it at the surface of the oxygen storage component and post-carry the rest of Pd on the surfaces of alumina and the oxygen storage component.

Specifically, an aspect of the invention is directed to an exhaust gas purification catalyst including a catalyst layer that is formed on a support and contains an oxygen storage component containing Ce and Zr, alumina and a catalytic metal. In the exhaust gas purification catalyst, a plurality of primary particles of the oxygen storage component and a plurality of primary particles of the alumina agglomerate to form each of metal oxide composite particles, and the catalytic metal includes Pd doped in the oxygen storage component particles to constitute each of the oxygen storage component particles with Ce and Zr and exposed at the surfaces of the oxygen storage component particles and Pd adhered to the surfaces of the oxygen storage component particles and the surfaces of the alumina particles.

Pd is conventionally known to be useful as an oxidation catalyst and, particularly, oxidized Pd exhibits high oxidative catalytic function. However, when the air-fuel ratio of exhaust gas becomes fuel-rich, the oxygen concentration required for oxidation of HC and CO decreases and oxidized Pd is reduced to Pd metal, whereby the oxidative catalytic function of Pd tends to deteriorate.

One of significant points of the present invention is that even when the air-fuel ratio becomes fuel-rich, oxygen released from the oxygen storage component allows Pd to easily keep its oxidized form exhibiting high oxidative catalytic function. As a result, the HC and CO conversion performance at rich air-fuel ratios enhances. In other words, for three-way catalysts, their A/F window can be expanded to the fuel-rich side.

Another significant point is that since the oxygen storage component is doped with Pd, it enhances the oxygen storage/release capacity.

However, when Pd is doped in the oxygen storage component, the amount of Pd exposed at the surfaces of the oxygen storage component particles is small. Particularly when a mixture of coprecipitated Ce-Zr-Pd hydroxide and aluminium hydroxide is calcined to form metal oxide composite particles each composed of an agglomerate of oxygen storage component primary particles and alumina primary particles, Pd dissolves in alumina and, therefore, the amount of Pd exposed at the surfaces of the oxygen storage component particles is small. In such a case, Pd cannot be effectively used for exhaust gas conversion, particularly for oxidation ofHC and CO.

In this respect, what is important in the invention is that not all of Pd is doped in the oxygen storage component particles but part of Pd is doped therein and the rest is adhered to the surfaces of the oxygen storage component particles and alumina particles. Thus, alumina can be effectively used as a support material for Pd, and Pd carried on the oxygen storage component and Pd carried on alumina can effectively enhance the exhaust gas conversion performance.

Furthermore, in each metal oxide composite particle, alumina particles serve as steric hindrances to restrain sintering of oxygen storage component particles. Furthermore, since Pd particles exposed at the surface of each oxygen storage component particle are integrated with the oxygen storage component particle by doping thereinto, sintering of the Pd particles can also be restrained.

The oxygen storage component particles containing Ce and Zr may be doped with one or more trivalent rare earth metals other than Ce, such as lanthanum (La), yttrium (Y) or neodymium (Nd), in addition to Pd. In such a case, the amount of doped rare earth metal is sufficient if it is 0.6% to 4.0% by mole, both inclusive, with respect to the total amount of the metal oxide composite particles excluding Pd.

The Pd doping ratio of the amount of Pd doped in the oxygen storage component particles to the sum of the amount of Pd doped in the oxygen storage component particles and the amount of Pd adhered to the surfaces of the oxygen storage component particles and the surfaces of the alumina particles is 1% to 60% by mass, both inclusive.

Specifically, not all of Pd doped in each oxygen storage component particle is exposed at the surface of the particle but only part of Pd doped therein is exposed at the surface thereof. Therefore, in order to provide Pd exposed at the surfaces of the oxygen storage component particles to effectively act as a catalytic metal, the above Pd doping ratio is not less than 1% by mass. Furthermore, there is a limit to enhancing the oxygen storage/release capacity of the oxygen storage component by increasing the amount of doped Pd and excessively doped Pd is wasted. In addition, as the Pd doping ratio increases, the amount of Pd carried on the surfaces of the oxygen storage component particles and alumina particles accordingly becomes smaller. Therefore, in order to effectively enhance the exhaust gas conversion performance by the action of Pd carried on the oxygen storage component and Pd carried on the alumina, the above Pd doping ratio is not more than 60% by mass. More preferably, the upper limit of the Pd doping ratio is 50% by mass. Still more preferably, the Pd doping ratio is 5% to 40% by mass, both inclusive.

The metal oxide composite particles preferably have a (Ce+Zr)/Al molar ratio of 0.08 to 0.97 both inclusive.

If, like this, the proportion of alumina in the metal oxide composite particles is large, alumina particles can be effectively used as steric hindrances, which is advantageous in restraining sintering of oxygen storage component particles.

In a preferred embodiment, the exhaust gas purification catalyst further includes, in addition to the catalyst layer containing the metal oxide composite particles, a catalyst layer containing Rh and formed over the support and the catalyst layer containing the metal oxide composite particles is disposed in a lower layer closer to the surface of the support than the catalyst layer containing Rh.

Rh effectively acts to reduce NOx in exhaust gas but is likely to be alloyed by reaction with Pd and thereby deteriorates the catalytic activity. Furthermore, Rh, unlike Pd, exhibits high NOx reductive conversion performance when in metallic form (when reduced) than when oxidized. However, when Pd advantageous in oxidized form and Rh advantageous in metallic form are close to each other, both the catalytic metals interact with each other to make their electronic states unstable and thereby deteriorate the catalytic activity.

To cope with this, since in this preferred embodiment Pd and Rh are contained in different catalyst layers, this prevents deterioration of catalytic activity due to interaction between both the catalytic metals and makes it easy for both the catalytic metals to keep their advantageous electronic states. Furthermore, Pd easily deteriorates and is likely to be poisoned with sulfur and phosphorus. However, since in this preferred embodiment Pd is contained in the lower catalyst layer, the upper catalyst layer containing Rh protects Pd to reduce heat deterioration and poisoning of Pd.

The catalyst layer containing Rh preferably further contains Pt Pt, like Rh, exhibits an excellent catalytic activity when in metallic form. Therefore, Pt is contained in the catalyst layer different from the catalyst layer containing Pd, i.e., in the catalyst layer containing Rh. In this case, since both of Pt and Rh exhibit excellent catalytic activity when in metallic form, they are less likely to cause an unfavorable interaction.

A preferable method for manufacturing the exhaust gas purification catalyst containing the Pd-carried oxygen storage component particles includes the steps of: calcining a mixture of coprecipitated Ce-Zr-Pd hydroxide and aluminium hydroxide to prepare metal oxide composite particles each composed of an agglomerate of a plurality of primary particles of the oxygen storage component containing Ce, Zr and Pd and a plurality of primary particles of alumina so that at least part of Pd is exposed at the surfaces of the primary particles of the oxygen storage component; and bringing the metal oxide composite particles into contact with a solution of Pd to adhere Pd to the surfaces of the oxygen storage component particles and the surfaces of the alumina particles.

Thus, a catalyst material can be obtained in which a plurality of primary particles of the oxygen storage component and a plurality of primary particles of alumina agglomerate to form each of metal oxide composite particles, part of Pd is doped in the oxygen storage component particles to constitute each of the oxygen storage component particles with Ce and Zr, the rest of Pd is adhered to the surfaces of the oxygen storage component particles and the alumina particles and part of the doped Pd is exposed at the surfaces of the oxygen storage component particles.

The coprecipitated Ce-Zr-Pd hydroxide can be obtained by adding a basic solution to a mixed solution of Ce, Zr and Pd salts while stirring the mixed solution. If aqueous ammonia is used as the basic solution, it is difficult to produce a palladium hydroxide. Therefore, preferred examples of the basic solution include NaOH, KOH, Na₂CO₃ and K₂CO₃.

The coprecipitated Ce-Zr-Pd hydroxide and the aluminium hydroxide may be separately prepared and then mixed. However, if aqueous ammonia is first added to a solution of an Al salt to obtain a precipitate of aluminium hydroxide and, then, a basic solution, such as NaOH or KOH, and a mixed solution of Ce, Zr and Pd salts are concurrently added to the solution including the precipitated aluminium hydroxide to produce a coprecipitated hydroxide as a precursor of the oxygen storage component, this provides a mixture in which the coprecipitated hydroxide and the aluminium hydroxide are well mixed.

Alternatively, also by adding a basic solution, such as NaOH or KOH, to the solution including the precipitated aluminium hydroxide and then adding a mixed solution of Ce, Zr and Pd salts to produce a coprecipitated hydroxide as a precursor of the oxygen storage component, a mixture in which the coprecipitated hydroxide and the aluminium hydroxide are well mixed can be obtained.

When NaOH aqueous solution is added to a solution of an Al salt to obtain a precipitate of aluminium hydroxide, a mixed solution of Ce, Zr and Pd salts may be first added to the solution including the precipitated aluminium hydroxide and then a basic solution, such as NaOH or KOH, added. Alternatively, a mixed solution of Ce, Zr and Pd salts and a basic solution, such as NaOH or KOH, may be concurrently added to the solution the precipitated aluminium hydroxide.

The adhesion of Pd to the surfaces of the oxygen storage component particles and the alumina particles may be implemented by evaporation to dryness or by impregnating metal oxide composite powder with Pd solution and then drying and calcining it.

In doping one or more trivalent rare earth metals other than Ce into the oxygen storage component, a mixed solution of salts of Ce, Zr, Pd and the trivalent rare earth metals other than Ce can be prepared.

### BRIEF DESCRIPTION OF THE DRAWINGS

Figure **1** is a schematic diagram showing an exhaust gas purification catalyst according to the present invention.

Figure **2** is a flowchart showing a manufacturing method of the exhaust gas purification catalyst according to the present invention in order of process.

Figure **3** is a graph showing Pd concentrations on alumina surfaces.

Figure **4** is a graph showing Pd concentrations on the surfaces of Ce-Zr-La-Y-Pd mixed oxides.

Figure **5** is a graph showing relations between ratio of Pd doping and light-off performance.

Figure **6** is a graph showing the light-off temperatures of Inventive Examples 1 to 6 and Comparative Examples 1 to 6.

Figure **7** is a graph showing the light-off temperatures of Inventive Examples 7 to 12 and Comparative Examples 7 to 12.

### DETAILED DESCRIPTION OF THE INVENTION

Hereinafter, preferred embodiments of the invention will be described with reference to the drawings. Note that the following description of the preferred embodiments is merely illustrative in nature and is not intended to limit the scope, applications and use of the invention.

### <Structure of Exhaust Gas Purification Catalyst Material>

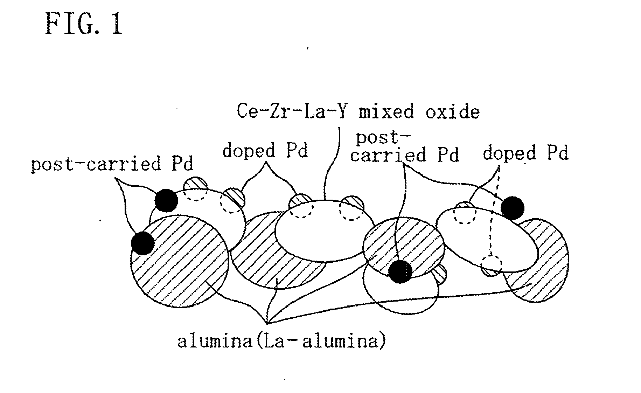

Figure **1** schematically shows an exhaust gas purification catalyst material according to the present invention. As shown in the figure, the catalyst material includes metal oxide composite particles (secondary particles) each composed of an agglomerate of a plurality of primary particles of an oxygen storage component (a Ce-Zr-La-Y quaternary oxide as an example in the figure) and a plurality of primary particles of alumina (La-alumina as an example in the figure). The oxygen storage component particles are doped with Pd so that Pd constitutes each oxygen storage component particle together with Ce and Zr. At least part of Pd is exposed at the surfaces of the oxygen storage component particles. In addition, Pd is post-carried on each of the oxygen storage component particles and the alumina particles and thereby adheres to their surfaces.

### <Manufacturing Method of Exhaust Gas Purification Catalyst>

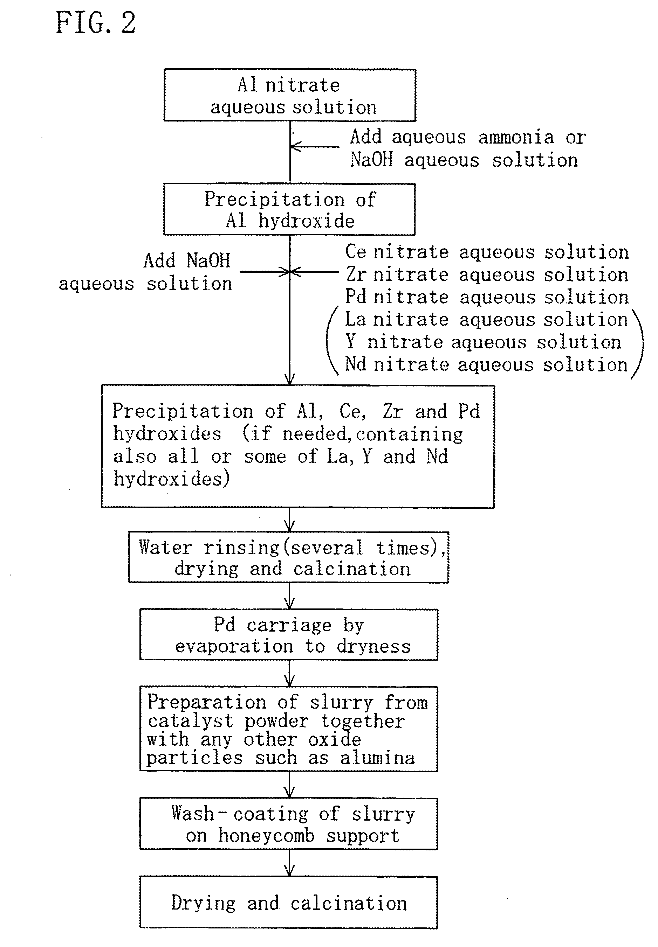

Figure **2** shows a manufacturing method of the exhaust gas purification catalyst in order of process. Aqueous ammonia or NaOH aqueous solution is added as a basic solution to an aqueous solution of aluminium nitrate as an aluminium salt while the aqueous solution of aluminium nitrate is stirred. Thus, a precipitate of aluminium hydroxide is produced as a precursor of alumina particles.

NaOH aqueous solution is added as a basic solution to the solution including the produced precipitate and respective aqueous solutions of a Ce salt, a Zr salt and a Pd salt are then added to and mixed with the above solution. If needed, one or more kinds of solutions of other trivalent rare earth metal salts, such as La, Y and Nd, are added to and mixed with the above solution. Thus, hydroxides of Ce, Zr and Pd (and, if needed, one or more of other trivalent rare earth metals, such as La, Y and Nd) are coprecipitated, thereby obtaining a mixture of the coprecipitate and aluminium hydroxide. In producing the coprecipitate, the mixed solution is preferably set at a temperature ranging from room temperature to about 80°C and the pH of the solution after addition of the basic solution is preferably set at 9 to 12.

The obtained precipitate mixture is rinsed in water several times and then dried and calcined. The drying is preferably carried out at a temperature from about 150°C to about 250°C for a few to a dozen hours and the calcination is preferably carried out at a temperature from about 450°C to about 600°C for a few to a dozen hours. The product thus obtained is powder of a metal oxide composite composed of agglomerates of primary particles of an oxygen storage component containing Ce and Zr, doped with Pd and having at least part of the doped Pd exposed at the particle surfaces and primary particles of alumina.

Next, an aqueous solution of a Pd salt is added to the metal oxide composite powder and then evaporated to dryness (whereby Pd is post-carried on the metal oxide composite). Thus, Pd is adhered to the surfaces of the oxygen storage component particles and the surfaces of the alumina particles. Then, the dried residue is ground into catalyst powder (as an exhaust gas purification catalyst material).

Thereafter, the catalyst powder is wash-coated on a honeycomb support. Specifically, a slurry is prepared by blending the catalyst powder with a binder and water. If needed, during the blending, alumina or any other oxide powder and/or any other catalyst powder are added to the slurry. Then, a honeycomb support is immersed into the slurry and picked up therefrom, excess slurry adhering to the support surface is removed, and the support is dried and calcined, thereby obtaining an exhaust gas purification catalyst (honeycomb catalyst) in which a catalyst layer is formed on the honeycomb support. The drying is preferably carried out at a temperature from about 150°C to about 200°C for a few hours and the calcination is preferably carried out at a temperature from about 450°C to about 600°C for a few hours.

In forming a plurality of catalyst layers in stratified form on the honeycomb support, a plurality of kinds of catalytic powders are wash-coated in appropriate order on the honeycomb support.

### <Embodiment 1>

This embodiment relates to an exhaust gas purification catalyst prepared using only the catalyst material shown in Figure 1, except for a binder.

### -Inventive Example -

A honeycomb catalyst according to an example of this embodiment was prepared by the exhaust gas purification catalyst manufacturing method shown in Figure 2. Used as source salts were aluminium nitrate enneahydrate, cerium nitrate (III) hexahydrate, zirconium oxynitrate dihydrate, lanthanum nitrate, yttrium nitrate and palladium nitrate. In order to obtain metal oxide composite particles, the drying was carried out at 200°C for 12 hours and the calcination was carried out at 500°C for 10 hours. The composition of the obtained metal oxide composite particle excluding Pd was a CeO₂/ZrO₂/La₂O₃/Y₂O₃/Al₂O₃ mass ratio of 11.0:8.0:1.0:0.4:79.6 (% by mass), and the amount of doped Pd in the metal oxide composite particle was 0.1% by mass. The amount of Pd post-carried on the metal oxide composite by evaporation to dryness was 0.4% by mass. In other words, the obtained catalyst material was a composite catalyst material having a ratio ofPd doping of 20%.

The calcination of the slurry applied to the honeycomb support was carried out at 500°C for two hours. The amount of metal oxide composite powder carried per L of the honeycomb support was 80g. Therefore, the total amount of Pd carried on the support, including the amount of doped Pd and the amount of post-carried Pd, was 0.4g/L. Used as a binder was a Zr binder. The amount of binder used was 8.9 g/L.

### - Comparative Example -

Respective aqueous solutions of source salts of the above six kinds were mixed with each other and NaOH solution was added to the mixed solution to coprecipitate all metal hydroxides. The water rinsing, drying and calcination of the coprecipitate were carried out under the same conditions as in preparation of the metal oxide composite particles of the above Inventive Example. The obtained mixed oxide particles were carried on a honeycomb support under the same conditions as in Inventive Example. The composition of the obtained mixed oxide particle was a CeO₂/ZrO₂/La₂O₃/Y₂O₃/Al₂O₃ mass ratio of 11.0:8.0:1.0:0.4:79.6 (% by mass), and the amount of doped Pd in the mixed oxide particle was 0.5% by mass. The amount of Pd post-carried on the mixed oxide by evaporation to dryness was zero. The amount of mixed oxide powder carried per L of the honeycomb support was 80g, the total amount of Pd carried on the support was 0.4 g/L and the amount of binder was 8.9 g/L.

### - Evaluation of Light-Off Performance -

The honeycomb catalysts of the above Inventive Example and Comparative Example were heat-aged in an air atmosphere at 1000°C for 24 hours, then set in a model exhaust gas flow reactor, then preconditioned and then measured in terms of light-off temperature T50 (°C). The preconditioning was carried out by increasing the temperature of a model exhaust gas having an A/F ratio of 14.7 (see Table 1) at a rate of 30°C per minute from a room temperature while allowing the model exhaust gas to flow through the catalyst at a space velocity of 120000/h and then keeping the model exhaust gas at 600°C for 20 minutes.

The model exhaust gas for light-off performance evaluation had an A/F ratio of 14.7±0.9. Specifically, a mainstream gas was allowed to flow constantly at an A/F ratio of 14.7 and a specified amount of gas for changing the A/F ratio was added in pulses at a rate of 1 Hz, so that the A/F ratio was forcedly oscillated within the range of ±0.9. The respective gas compositions at A/F ratios of 14.7, 13.8 and 15.6 are shown in Table 1. The space velocity SV was set at 60000/h and the rate of temperature increase was set at 30 °C/mm.

**[Table 1]**

| | | | |
|---|---|---|---|
| A/F | 13.8 | 14.7 | 15.6 |
| C₃H₆ (ppm) | 541 | 555 | 548 |
| CO (%) | 2.35 | 0.60 | 0.59 |
| NO (ppm) | 975 | 1000 | 980 |
| CO₂ (%) | 13.55 | 13.90 | 13.73 |
| H₂ (%) | 0.85 | 0.20 | 0.20 |
| O₂ (%) | 0.58 | 0.60 | 1.85 |
| H₂O (%) | 10 | 10 | 10 |

T50 (°C) is the gas temperature at the catalyst entrance when the concentration of each exhaust gas component (HC, CO and NOx) detected downstream of the catalyst reaches half of that of the corresponding exhaust gas component flowing into the catalyst (when the conversion efficiency reaches 50%) after the temperature of the model exhaust gas is increased, and indicates the low-temperature catalytic conversion performance of the catalyst. The measurement results are shown in Table 2.

**[Table 2]**

| | Light-Off Temperature T50 | | |
|---|---|---|---|
| | HC | CO | NOx |
| Inventive Example | 298°C | 309°C | 331°C |
| Comparative Example | 312°C | 321°C | 350°C |

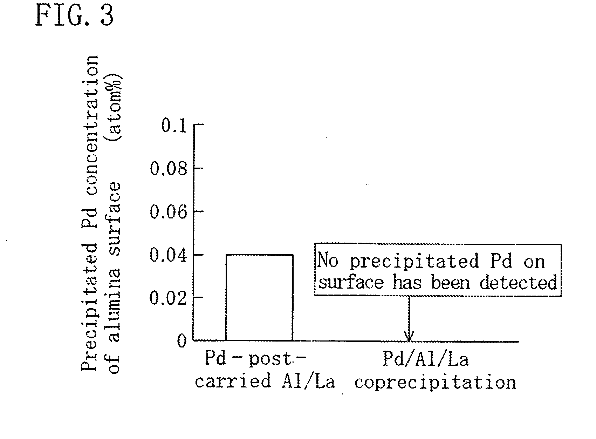

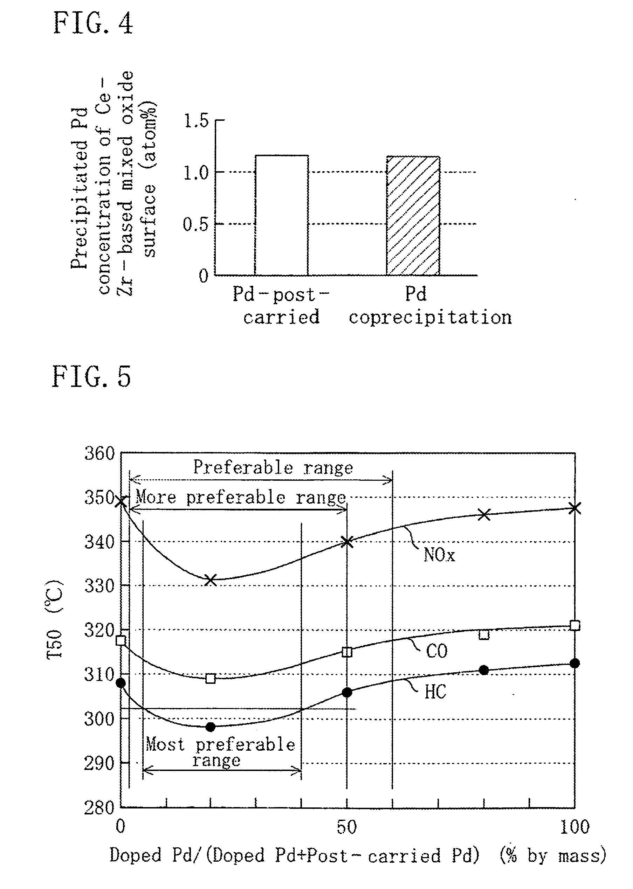

The catalyst of Inventive Example was a dozen degrees Celsius lower in light-off temperatures T50 for all of HC, CO and NOx than the catalyst of Comparative Example. Now, the reasons for this are considered with reference to Figures 3 and 4.

Figure 3 shows the results obtained by measuring the Pd concentration of alumina surface with XPS (X-ray Photoelectron Spectroscopy) in a Pd post-carriage case where Pd was post-carried by evaporation to dryness on La-alumina containing 5% by mass of La (indicated as "Pd-post-carried Al/La" in the figure) and a Pd coprecipitation case where NaOH aqueous solution was added to a mixed solution of respective nitrate salts of La, Al and Pd and a coprecipitate thus obtained was rinsed in water, dried and calcined (indicated as "Pd/Al/La coprecipitation" in the figure).

Figure 4 shows the results obtained by measuring the Pd concentration of mixed oxide surface with XPS in a Pd post-carriage case where Pd was post-carried by evaporation to dryness on a Ce-Zr-La-Y mixed oxide obtained by adding NaOH aqueous solution to a mixed solution of respective nitrate salts of Ce, Zr, La and Y and subjecting a coprecipitate thus obtained to water-rinsing, drying and calcination and a Pd coprecipitation case where a nitrate salt of Pd was added to a mixed solution of the same nitrate salts and a Ce-Zr-La-Y-Pd mixed oxide was obtained by the same coprecipitation method.

Figure 3 shows that Pd exists on alumina surface in the Pd post-carriage case but Pd does not exists on alumina surface in the Pd coprecipitation case. This is believed to be due to that with the use of the coprecipitation method, Pd fully dissolves in alumina and is thereby hardly exposed at the alumina surface. Figure 4 shows that in both the Pd post-carriage case and the Pd coprecipitation case Pd exists on the surfaces of the mixed oxide particles to substantially the same degree.

Therefore, it can be said that one of reasons why the light-off performance of the catalyst of Comparative Example was lower than that of the catalyst of Inventive Example is that substantially no Pd existed on alumina surface, that is, the dispersibility of Pd was low, or the amount of Pd effectively acting as a catalytic metal was small, or alumina did not effectively act as a support material for the catalytic metal. In yet other words, it can be said that in the catalyst of Inventive Example alumina was effectively used as a support material for Pd to highly disperse Pd on alumina surface and thereby enhance the light-off performance.

### - Ratio of Pd Doping into Oxygen Storage Component Particle -

According to the manufacturing method shown in Figure **2****,** five honeycomb catalysts were obtained as Samples 1 to 5 by using various ratios between the amount of Pd doped in an oxygen storage component (amount of palladium nitrate added to a mixed solution in a coprecipitation process) and the amount of Pd post-carried on a metal oxide composite (amount of Pd carried by evaporation to dryness) while carrying the same total amount of Pd, 0.5% by mass, on the metal oxide composite particle, then heat-aged in the previously described manner and measured in terms of light-off temperature in the previously described manner. The compositions of the samples are as shown in Table 3. The measurement results are shown in Figure **5**.

**[Table 3]**

| Sample | Composition of Metal Oxide Composite Particle (% by mass) | | | | | Amount of doped Pd (% by mass) | Amount of post-carried Pd (% by mass) |
|---|---|---|---|---|---|---|---|
| | CeO₂ | ZrO₂ | La₂O₃ | Y₂O₃ | Al₂O₃ | | |
| 1 | 11.0 | 8.0 | 1.0 | 0.4 | 79.6 | 0 | 0.50 |
| 2 | 11.0 | 8.0 | 1.0 | 0.4 | 79.6 | 0.10 | 0.40 |
| 3 | 11.0 | 8.0 | 1.0 | 0.4 | 79.6 | 0.25 | 0.25 |
| 4 | 11.0 | 8.0 | 1.0 | 0.4 | 79.6 | 0.40 | 0.10 |
| 5 | 11.0 | 8.0 | 1.0 | 0.4 | 79.6 | 0.50 | 0 |

Figure **5** shows that Samples 2 and 3 having their respective ratios of Pd doping of 20% by mass and 50% by mass exhibited lower light-off temperatures T50 for all of HC, CO and NOx than Samples 1 and 5 having their respective ratios of Pd doping of 0% by mass and 100% by mass. Particularly, Sample 2 having a ratio of Pd doping of 20% by mass exhibited a significantly enhanced light-off performance. Even Sample 4 having a ratio of Pd doping of 80% by mass exhibited a better light-off performance for NOx than Samples 1 and 5 having their respective ratios of Pd doping of 0% by mass and 100% by mass. From this, it will be seen that if part of Pd is doped into the oxygen storage component and the rest is post-carried on the metal oxide composite, this is advantageous in enhancing the light-off performance.

Furthermore, it can be seen from Figure **5** that the ratio of Pd doping is preferably 1% to 60% by mass both inclusive, more preferably 1% to 50% by mass both inclusive and still more preferably 5% to 40% by mass both inclusive.

Sample 5 having a ratio of Pd doping of 100% by mass exhibited substantially the same light-off performance as Comparative Example in Table 2. Therefore, although in this experiment no difference was exhibited in light-off performance between the case where Al hydroxide was coprecipitated with the other metal hydroxides, such as Ce and Zr, and the case where Al hydroxide was precipitated earlier than the other metal hydroxides, it is believed from the results of Figure **3** and in view of ease of dissolution of Pd into alumina that Al hydroxide should be precipitated separately from the other metal hydroxides, such as Ce and Zr.

### - (Ce+Zr)/Al Molar Ratio -

Since in Figure 5 the sample having a ratio of Pd doping of 20% by mass exhibited the best performance, a plurality of other samples (honeycomb catalysts) having a ratio of Pd doping of 20% by mass were prepared with various contents of Ce, Zr, La, Y and Al constituting the metal oxide composite particles, then heat-aged in the previously described manner and measured in terms of light-off temperature in the previously described manner. The compositions and light-off temperatures of these samples are shown in Table 4.

**[Table 4]**

| Sample | Composition of Metal Oxide Composite Particle (% by mass) | | | | | T50 (°C) | | |
|---|---|---|---|---|---|---|---|---|
| | Ce | Zr | La | Y | Al | HC | CO | NOx |
| 2 | 3.76 | 3.82 | 0.36 | 0.21 | 91.85 | 298 | 309 | 331 |
| 6 | 7.25 | 7.35 | 0.69 | 0.41 | 84,29 | 303 | 315 | 337 |
| 7 | 11.87 | 12.04 | 1.16 | 0.67 | 74.25 | 300 | 309 | 327 |
| 8 | 23.48 | 23.86 | 2.27 | 1.33 | 49.06 | 302 | 310 | 331 |
| Remarks | Amount of doped Pd: 0.1% by mass, Amount of post-carried Pd: 0.4% by mass | | | | | | | |

Table 4 shows that both of Sample 2 having a small Al content and Sample 8 having a large Al content exhibited good light-off performance. The (Ce+Zr)/Al molar ratio in Sample 2 was 8/100 and the (Ce+Zr)/Al molar ratio in Sample 8 was 97/100. Therefore, it can be seen that metal oxide composite particles having a (Ce+Zr)/Al molar ratio of 0.08 to 0.97 both inclusive exhibits a good light-off performance. The amount of rare earth metal (the total amount of La and Y) is sufficient if it is 0.6% to 4.0% by mole, both inclusive, with respect to the total amount of metal oxide composite particles excluding Pd.

### <Embodiment 2>

This embodiment relates to an exhaust gas purification catalyst prepared using a combination of the catalyst material shown in Figure 1 and another or other catalyst materials.

### - Inventive Example 1 -

A catalytic coating (monolayer) in which the following Materials A to E and a binder were mixed together was formed on a honeycomb support:
- Material A(10): (composite catalyst material having a ratio of Pd doping of 10%) of 25 g/L in which the total amount ofPd (i.e., the sum of the amount of doped Pd and the amount of post-carried Pd, the same applies below) is 0.13 g/L;
- Material B: (Pd-carried alumina) of 45 g/L in which the amount of Pd is 0.27 g/L;
- Material C: (cerium oxide) of 6 g/L;
- Material D: (Rh-carried Zr-Ce-Nd mixed oxide) of 65 g/L in which the amount of Rh is 0.1 g/L;
- Material E: (Pt-carried alumina) of 10 g/L in which the amount of Pt is 0.2 g/L; and Binder (zírconyl nitrate) of 17 g/L.

Here, the unit "g/L" indicates the amount of component carried per L of the honeycomb support. The composition of the "composite catalyst material" excluding Pd was a CeO₂/ZrO₂/La₂O₃/Y₂O₃/Al₂O₃ mass ratio of 11.0:8.0:1.0:0.4:79.6 (% by mass). "Alumina" is La-alumina containing 4% by mass of La₂O₃. The composition of the "Zr-Ce-Nd mixed oxide" was a ZrO₂/CeO₂/Nd₂O₃ mass ratio of 80:10:10 (% by mass). The number in parentheses of "Material A(10)" indicates the ratio of Pd doping. An evaporation-to-dryness method was used to carry catalytic metals on metal oxides for Materials B, D and E. These points apply also to the following other Inventive Examples and Comparative Examples.

### -Inventive Example 2 -

A catalytic coating of bilayer structure including the following lower layer (containing Pd as a catalytic metal) and upper layer (containing Rh as a catalytic metal) was formed on a honeycomb support:
- Lower layer -: Material A(20) (composite catalyst material having a ratio of Pd doping of 20%) of 25 g/L in which the total amount of Pd is 0.13 g/L,
Material B (Pd-carried alumina) of 45 g/L in which the amount of Pd is 0.27 g/L,
Material C (cerium oxide) of 6 g/L, and
Binder of 9 g/L; and
- Upper layer -: Material D (Rh-carried Zr-Ce-Nd mixed oxide) of 65 g/L in which the amount of Rh is 0.1 g/L,
Material F (alumina with no catalytic metal carried thereon) of 10 g/L, and
Binder of 9 g/L.

"Alumina with no catalytic metal carried thereon", serving as Material F, is La-alumina containing 4% by mass of La₂O₃ (the same applies below).

### -Inventive Example 3-

A catalytic coating of bilayer structure including the following lower layer (containing Rh as a catalytic metal) and upper layer (containing Pd as a catalytic metal) was formed on a honeycomb support:
- Lower layer -: Material C (cerium oxide) of 6 g/L,
Material D (Rh-carried Zr-Ce-Nd mixed oxide) of 65 g/L in which the amount ofRh is 0.1 g/L,
Material F (alumina with no catalytic metal carried thereon) of 10 g/L, and
Binder of 9 g/L; and
- Upper layer -: Material A(20) (composite catalyst material having a ratio of Pd doping of 20%) of 25 g/L in which the total amount of Pd is 0.13 g/L,
Material B (Pd-carried alumina) of 45 g/L in which the amount of Pd is 0.27 g/L, and
Binder of 9 g/L.

### -Inventive Example 4 -

A catalytic coating of bilayer structure including the following lower layer (containing Pd as a catalytic metal) and upper layer (containing Rh and Pt as catalytic metals) was formed on a honeycomb support:
- Lower layer -: Material A(40) (composite catalyst material having a ratio of Pd doping of 40%) of 25 g/L in which the total amount of Pd is 0.13 g/L,
Material B (Pd-carried alumina) of 45 g/L in which the amount of Pd is 0.27 g/L,
Material C (cerium oxide) of 6 g/L, and
Binder of 9 g/L; and
- Upper layer -: Material D (Rh-carried Zr-Ce-Nd mixed oxide) of 65 g/L in which the amount of Rh is 0.1 g/L,
Material E (Pt-carried alumina) of 10 g/L in which the amount of Pt is 0.2 g/L, and
Binder of 9 g/L.

### -Inventive Example 5 -

A catalytic coating of bilayer structure including the following lower layer (containing Pd and Pt as catalytic metals) and upper layer (containing Rh and Pt as catalytic metals) was formed on a honeycomb support:
- Lower layer -: Material A(50) (composite catalyst material having a ratio of Pd doping of 50%) of 25 g/L in which the total amount of Pd is 0.13 g/L,
Material B (Pd-carried alumina) of 45 g/L in which the amount of Pd is 0.27 g/L,
Material G (Pt-carried cerium oxide) of 6 g/L in which the amount of Pt is 0.075 g/L, and
Binder of 9 g/L; and
- Upper layer -: Material D (Rh-carried Zr-Ce-Nd mixed oxide) of 65 g/L in which the amount of Rh is 0.1 g/L,
Material E (Pt-carried alumina) of 10 g/L in which the amount of Pt is 0.125 g/L, and
Binder of 9 g/L.

An evaporation-to-dryness method was used to carry Pt on cerium oxide for Material G.

### -Inventive Example 6 -

A catalytic coating of bilayer structure including the following lower layer (containing Pd as a catalytic metal) and upper layer (containing Rh and Pd as catalytic metals) was formed on a honeycomb support:
- Lower layer -: Material A(60) (composite catalyst material having a ratio of Pd doping of 60%) of 25 g/L in which the total amount of Pd is 0.13 g/L,
Material B (Pd-carried alumina) of 45 g/L in which the amount of Pd is 0.22 g/L,
Material C (cerium oxide) of 6 g/L, and
Binder of 9 g/L; and
- Upper layer -: Material B (Pd-carried alumina) of 10 g/L in which the amount of Pd is 0.05 g/L,
Material D (Rh-carried Zr-Ce-Nd mixed oxide) of 65 g/L in which the amount of Rh is 0.1 g/L, and
Binder of 9 g/L.

### -Inventive Example 7 -

A catalytic coating of three-layer structure including the following lower layer (containing Pd as a catalytic metal), middle layer (containing Pt as a catalytic metal) and upper layer (containing Rh as a catalytic metal) was formed on a honeycomb support:
- Lower layer -: Material A(20) (composite catalyst material having a ratio of Pd doping of 20%) of 25 g/L in which the total amount of Pd is 0.13 g/L,
Material B (Pd-carried alumina) of 45 g/L in which the amount of Pd is 0.27 g/L,
Material C (cerium oxide) of 6 g/L, and
Binder of 9 g/L;
- Middle layer -: Material E (Pt-carried alumina) of 33 g/L in which the amount of Pt is 0.2 g/L, and
Binder of 4 g/L; and
- Upper layer -: Material D (Rh-carried Zr-Ce-Nd mixed oxide) of 65 g/L in which the amount ofRh is 0.1 g/L,
Material F (alumina with no catalytic metal carried thereon) of 10 g/L, and
Binder of 9 g/L.

### -Inventive Example 8 -

A catalytic coating of three-layer structure including the following lower layer (containing Pt as a catalytic metal), middle layer (containing Pd as a catalytic metal) and upper layer (containing Rh as a catalytic metal) was formed on a honeycomb support:
- Lower layer -: Material E (Pt-carried alumina) of 33 g/L in which the amount of Pt is 0.2 g/L, and
Binder of 4 g/L;
- Middle layer -: Material A(20) (composite catalyst material having a ratio of Pd doping of 20%) of 25 g/L in which the total amount of Pd is 0.13 g/L,
Material B (Pd-carried alumina) of 45 g/L in which the amount of Pd is 0.27 g/L,
Material C (cerium oxide) of 6 g/L, and
Binder of 9 g/L; and
- Upper layer -: Material D (Rh-carried Zr-Ce-Nd mixed oxide) of 65 g/L in which the amount of Rh is 0.1 g/L,
Material F (alumina with no catalytic metal carried thereon) of 10 g/L, and
Binder of 9 g/L.

### -Inventive Example 9 -

A catalytic coating of three-layer structure including the following lower layer (containing Pd as a catalytic metal), middle layer (containing Rh as a catalytic metal) and upper layer (containing Pd as a catalytic metal) was formed on a honeycomb support:
- Lower layer -: Material A(20) (composite catalyst material having a ratio of Pd doping of 20%) of 25 g/L in which the total amount of Pd is 0.1 g/L,
Material B (Pd-carried alumina) of 45 g/L in which the amount of Pd is 0.2 g/L,
Material C (cerium oxide) of 6 g/L, and
Binder of 9 g/L;
- Middle layer -: Material D (Rh-carried Zr-Ce-Nd mixed oxide) of 33 g/L in which the amount of Rh is 0.1 g/L,
Material F (alumina with no catalytic metal carried thereon) of 33 g/L, and
Binder of 8 g/L; and
- Upper layer -: Material A(20) (composite catalyst material having a ratio of Pd doping of 20%) of 65 g/L in which the total amount of Pd is 0.1 g/L,
Material F (alumina with no catalytic metal carried thereon) of 10 g/L, and
Binder of 9 g/L.

### - Inventive Example 10 -

A catalytic coating of three-layer structure including the following lower layer (containing Pd as a catalytic metal), middle layer (containing Rh and Pt as catalytic metals) and upper layer (containing Pd as a catalytic metal) was formed on a honeycomb support:
- Lower layer -: Material A(20) (composite catalyst material having a ratio of Pd doping of 20%) of 25 g/L in which the total amount of Pd is 0.1 g/L,
Material B (Pd-carried alumina) of 45 g/L in which the amount of Pd is 0.2 g/L,
Material C (cerium oxide) of 6 g/L, and
Binder of 9 g/L;
- Middle layer -: Material D (Rh-carried Zr-Ce-Nd mixed oxide) of 33 g/L in which the amount of Rh is 0.1 g/L,
Material E (Pt-carried alumina) of 33 g/L in which the amount of Pt is 0.2 g/L, and
Binder of 8 g/L; and
- Upper layer -: Material A(20) (composite catalyst material having a ratio of Pd doping of 20%) of 65 g/L in which the total amount of Pd is 0.1 g/L,
Material F (alumina with no catalytic metal carried thereon) of 10 g/L, and
Binder of 9 g/L.

### - Inventive Example 11 -

A catalytic coating of three-layer structure including the following lower layer (containing Pd and Pt as catalytic metals), middle layer (containing Rh as a catalytic metal) and upper layer (containing Pd as a catalytic metal) was formed on a honeycomb support:
- Lower layer -: Material A(20) (composite catalyst material having a ratio of Pd doping of 20%) of 25 g/L in which the total amount of Pd is 0.1 g/L,
Material B (Pd-carried alumina) of 45 g/L in which the amount of Pd is 0.2 g/L,
Material C (cerium oxide) of 6 g/L,
Material E (Pt-carried alumina) of 33 g/L in which the amount of Pt is 0.2 g/L, and
Binder of 13 g/L;
- Middle layer -: Material D (Rh-carried Zr-Ce-Nd mixed oxide) of 33 g/L in which the amount of Rh is 0.1 g/L, and
Binder of 4 g/L; and
- Upper layer -: Material A(20) (composite catalyst material having a ratio of Pd doping of 20%) of 65 g/L in which the total amount of Pd is 0.1 g/L,
Material F (alumina with no catalytic metal carried thereon) of 10 g/L, and
Binder of 9 g/L.

### - Inventive Example 12 -

A catalytic coating of three-layer structure including the following lower layer (containing Pd as a catalytic metal), middle layer (containing Rh as a catalytic metal) and upper layer (containing Pd and Pt as catalytic metals) was formed on a honeycomb support:
- Lower layer -: Material A(20) (composite catalyst material having a ratio of Pd doping of 20%) of 25 g/L in which the total amount of Pd is 0.1 g/L,
Material B (Pd-carried alumina) of 45 g/L in which the amount of Pd is 0.2 g/L,
Material C (cerium oxide) of 6 g/L, and
Binder of 9 g/L;
- Middle layer: Material D (Rh-carried Zr-Ce-Nd mixed oxide) of 33 g/L in which the amount of Rh is 0.1 g/L, and
Binder of 4 g/L; and
- Upper layer -: Material A(20) (composite catalyst material having a ratio of Pd doping of 20%) of 65 g/L in which the total amount of Pd is 0.1 g/L,
Material E (Pt-carried alumina) of 33 g/L in which the amount of Pt is 0.2 g/L,
Material F (alumina with no catalytic metal carried thereon) of 10 g/L, and
Binder of 13 g/L.

### - Comparative Examples 1 to 12 -

Comparative Examples 1 to 12 used Material A(0) having a ratio of Pd doping of 0% (i.e., Material A in which all of Pd was post-carried), instead of their respective corresponding Materials A in Inventive Examples 1 to 12.

### - Evaluation of Light-Off Performance -

The catalysts of Inventive Examples 1 to 12 and Comparative Examples 1 to 12 were aged. Specifically, each catalyst was joined to the exhaust pipe of a 2L gasoline engine and then aged by repeating the following cycle for 50 hours at a temperature of 900°C at the entrance of the catalyst: flowing of exhaust gas with a stoichiometric air-fuel ratio for 60 seconds; flowing of exhaust gas with a lean air-fuel ratio for 10 seconds; and flowing of exhaust gas with a rich air-fuel ratio for 30 seconds. The volume of honeycomb support of each catalyst was 1L.

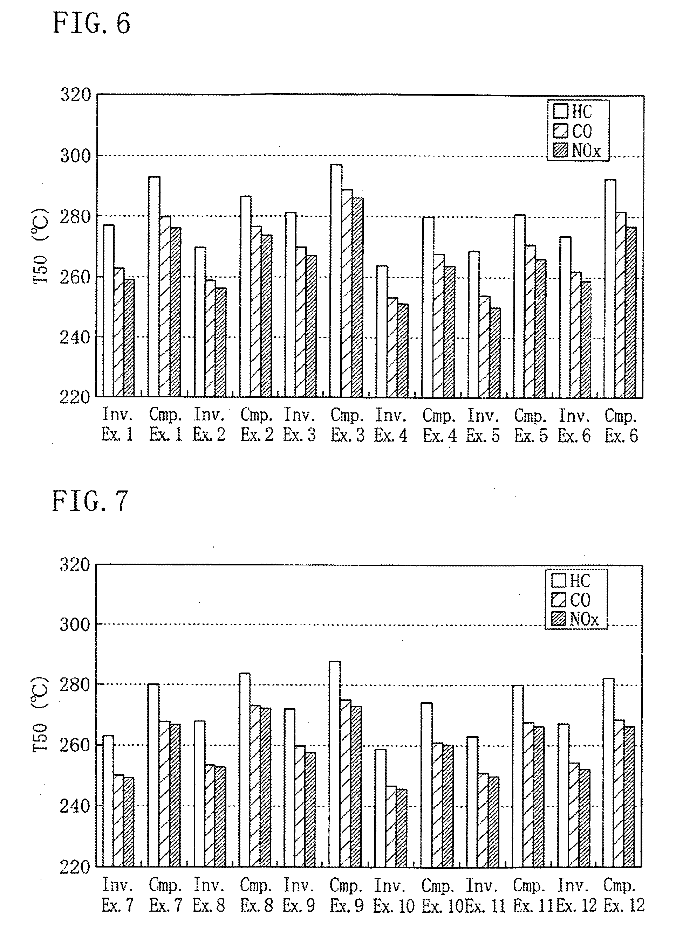

Sample catalysts in a columnar shape having a diameter of 25mm and a height of 50mm were cut out of their respective aged catalysts and then measured in terms of light-off temperature T50 (°C) with a model exhaust gas flow reactor. Like the previously described Evaluation of Light-Off Performance, the A/F ratio of the model exhaust gas was 14.7±0.9, the space velocity SV was set at 60000/h and the rate of temperature increase was set at 30 °C/min. The measurement results are shown in Tables 5 and 6 and Figures 6 and 7.

**[Table 5]**

| | Catalyst Material Structure | | | Lower layer Pd (g/L) | | Middle layer Pd (g/L) | | Upper layer Pd (g/L) | | T50(°C) | | |
|---|---|---|---|---|---|---|---|---|---|---|---|---|
| | Lower layer | Middle layer | Upper layer | Matr. A | Matr. B | Matr. A | Matr. B | Matr. A | Matr. B | HC | CO | NOx |
| Inv. Ex. 1 | Monolayer: A(10)+B+C+D+E | | | Pd in Material A: 0.13g/L, Pd in Material B: 0.27g/L | | | | | | 277 | 263 | 259 |
| Inv. Ex. 2 | A(20)+ B+C | - | D+F | 0.13 | 0.27 | | | | | 270 | 259 | 256 |
| Inv. Ex. 3 | C+D+F | - | A(20)+ B | | | | | 0.13 | 0.27 | 281 | 270 | 267 |
| Inv. Ex. 4 | A(40)+ B+C | - | D+E | 0.13 | 0.27 | | | | | 264 | 253 | 251 |
| Inv. Ex. 5 | A(50)+ B+G | - | D+E | 0.13 | 0.27 | | | | | 269 | 254 | 250 |
| Inv. Ex. 6 | A(60)+ B+C | - | B+D | 0.13 | 0.22 | | | | 0.05 | 274 | 262 | 259 |
| Inv. Ex. 7 | A(20)+ B+C | E | D+F | 0,13 | 0.27 | | | | | 263 | 250 | 249 |
| Inv. Ex. 8 | E | A(20)+ B+C | D+F | | | 0.13 | 0.27 | | | 268 | 254 | 253 |
| Inv. Ex. 9 | A(20)+ B+C | D+F | A(20)+ F | 0.1 | 0.2 | | | 0.1 | | 272 | 260 | 258 |
| Inv. Ex.10 | A(20)+ B+C | D+E | A(20)+ F | 0.1 | 0.2 | | | 0.1 | | 259 | 247 | 246 |
| Inv. Ex. 11 | A(20)+ B+E | D | A(20)+ F | 0.1 | 0.2 | | | 0.1 | | 263 | 251 | 250 |
| Inv. Ex.12 | A(20)+ B+C | D | A(20)+ E+F | 0.1 | 0.2 | | | 0.1 | | 267 | 254 | 252 |

| | | | | | | | | | | | | |
|---|---|---|---|---|---|---|---|---|---|---|---|---|
| Remarks: A: Pd (post-carried and doped) composite catalyst material, where the number in parentheses indicates the ratio of Pd doping. B: Pd-carried alumina C: cerium Oxide D: Rh-carried Ce-Zr-Nd mixed oxide E: Pt-carried alumina F: alumina with no catalytic metal carried thereon G: Pt-carried cerium oxide | | | | | | | | | | | | |

**[Table 6]**

| | Catalyst Material Structure | | | Lower layer Pd(g/L) | | Middle layer Pd (g/L) | | Upper layer Pd(g/L) | | T50 (°C) | | |
|---|---|---|---|---|---|---|---|---|---|---|---|---|
| | Lower layer | Middle layer | Upper layer | Matr. A | Matr. B | Matr. A | Matr. B | Matr. A | Matr. B | HC | CO | NOx |
| Cmp. Ex. 1 | Monolayer: A(0)+B+C+D+E | | | Pd in Material A: 0.13g/L, Pd in Material B: 0.27g/L | | | | | | 293 | 280 | 276 |
| Cmp. Ex. 2 | A(0)+ B+C | - | D+F | 0.13 | 0.27 | | | | | 287 | 277 | 274 |
| Cmp. Ex. 3 | C+D+F | - | A(0)+ B | | | | 0.13 | | 0.27 | 297 | 289 | 286 |
| Cmp. Ex. 4 | A(0)+ B+C | - | D+E | 0.13 | 0.27 | | | | | 280 | 268 | 264 |
| Cmp. Ex. 5 | A(0)+ B+C | - | D+E | 0.13 | 0.27 | | | | | 281 | 271 | 266 |
| Cmp. Ex. 6 | A(0)+ B+C | - | B+D | 0.13 | 0.22 | | | | 0.05 | 293 | 282 | 277 |
| Cmp. Ex. 7 | A(0)+ B+C | E | D+F | 0.13 | 0.27 | | | | | 280 | 268 | 267 |
| Cmp. Ex. 8 | E | A(0)+ B+C | D+F | | 0.13 | | 0.27 | | | 284 | 273 | 272 |
| Cmp. Ex. 9 | A(0)+ B+C | D+F | A(0)+ F | 0.1 | 0.2 | | 0.1 | | | 288 | 275 | 273 |
| Cmp. Ex.10 | A(0)+ B+C | E+D | A(0)+ F | 0.1 | 0.2 | | 0.1 | | | 274 | 261 | 260 |
| Cmp. Ex.11 | A(0)+ B+C | D | A(0)+ F | 0.1 | 0.2 | | 0.1 | | | 280 | 267 | 266 |
| Cmp. Ex.12 | A(0)+ B+C | D | A(0)+ E+F | 0.1 | 0.2 | | 0.1 | | | 282 | 268 | 266 |

| | | | | | | | | | | | | |
|---|---|---|---|---|---|---|---|---|---|---|---|---|
| Remarks: Comparative Examples 1 to 12 are the same as Inventive Examples 1 to 12, respectively, except that they used Material A(0) having a ratio of Pd doping of 0% as Material A. | | | | | | | | | | | | |

The measurement results show that the catalysts of Inventive Examples 1 to 12 exhibited lower light-off temperatures than those of corresponding Comparative Examples 1 to 12.

The catalyst of Inventive Example 2 has a structure in which Pd-based catalyst materials (Materials A and B) are in the lower layer and an Rh-based catalyst material is in the upper layer, and exhibited a lower light-off temperature than Inventive Example 3 having an inverted structure. The reason for this is believed to be due to an effect of the upper layer (the Rh-based catalyst material) restraining heat deterioration of Pd-based catalyst materials due to aging.

The catalyst of Inventive Example 9 has a three-layer structure in which one of the Pd-based catalyst materials in Inventive Example 2 (Material A) is located over an Rh-based catalyst layer (Materials D and F), and exhibited a higher light-off temperature than Inventive Example 2. Part of the reason for this is believed to be due to heat deterioration of the Pd-based catalyst material (Material A) in the upper layer.

Although both of Inventive Examples 7 and 8 have a three-layer structure, they are different from each other in that the former contains Pd-based catalyst materials (Materials A and B) in the lower layer but the latter in the middle layer. Comparison between both of Inventive Examples 7 and 8 shows that the former exhibited a lower light-off temperature than the latter. Part of the reason for this is believed to be that the Pd-based catalyst materials in Inventive Example 7 were less likely to be deteriorated by heat than those in Inventive Example 8.

Although both of Inventive Examples 9 and 10 have a three-layer structure, the latter is different from the former in that the middle layer containing an Rh-based catalyst material (Material D) further contains a Pt-based catalyst material (Material E). Comparison between both of Inventive Examples 9 and 10 shows that the latter exhibited a lower light-off temperature than the former. This is believed to be due to an effect of the Pt-based catalyst material and to mean that even if a mixture of Pt-based catalyst material and Rh-based catalyst material is contained in the same layer, there arises no unfavorable interaction between them.

Although both of Inventive Examples 10 and 12 have a three-layer structure, they are different from each other in that the former contains a Pt-based catalyst material (Material E) in the middle layer containing an Rh-based catalyst material (Material D) but the latter contains it in the upper layer containing a Pd-based catalyst material (Material A). Comparison between both of Inventive Examples 10 and 12 shows that the latter exhibited a higher light-off temperature than the former. The reason for this is believed to be that the Pt-based catalyst material (Material E) had no mutual adverse effect on the Rh-based catalyst material (Material D) but had a mutual adverse effect on the Pd-based catalyst material (Material A).

## Claims

1. An exhaust gas purification catalyst including a catalyst layer that is formed on a support and contains an oxygen storage component containing Ce and Zr, alumina and a catalytic metal, wherein
a plurality of primary particles of the oxygen storage component and a plurality of primary particles of the alumina agglomerate to form each of metal oxide composite particles, wherein
the catalytic metal comprises Pd doped in the oxygen storage component particles to constitute each of the oxygen storage component particles with Ce and Zr and exposed at the surfaces of the oxygen storage component particles doped with Pd, **characterized in that** the catalytic metal further comprises Pd adhered to the surfaces of the oxygen storage component particles and the surfaces of the alumina particles not doped with Pd, and
the Pd doping ratio of the amount of Pd doped in the oxygen storage component particles to the sum of the amount of Pd doped in the oxygen storage component particles and the amount of Pd adhered to the surfaces of the oxygen storage component particles and the surfaces of the alumina particles is 1% to 60% by mass, both inclusive.

2. The exhaust gas purification catalyst of claim 1, wherein the Pd doping ratio of the amount of Pd, doped in the oxygen storage component particles to the sum of the amount of Pd doped in the oxygen storage component particles and the amount of Pd adhered to the surfaces of the oxygen storage component particles and the surfaces of the alumina particles is 5% to 40% by mass, both inclusive

3. The exhaust gas purification catalyst of any one of claims 1 to 2, wherein the metal oxide composite particles have a (Ce+Zr)/Al molar ratio of 0.08 to 0.97 both inclusive.

4. The exhaust gas purification catalyst of any one of claims 1 to 3, further including a catalyst layer containing Rh in addition to the catalyst layer containing the metal oxide composite particles, the catalyst layer containing the metal oxide composite particles being disposed in a lower layer closer to the surface of the support than the catalyst layer containing Rh.

5. The exhaust gas purification catalyst of claim 4, wherein the catalyst layer containing Rh further contains Pt.

6. A method for manufacturing an exhaust gas purification catalyst that contains an oxygen storage component containing Ce and Zr, alumina and a catalytic metal, the method comprising the steps of:
calcining a mixture of coprecipitated Ce-Zr-Pd hydroxide and aluminium hydroxide to prepare metal oxide composite particles each composed of an agglomerate of a plurality of primary particles of the oxygen storage component containing Ce and Zr and doped with Pd and a plurality of primary particles of alumina not doped with Pd so that at least part of Pd is exposed at the surfaces of the primary particles of the oxygen storage component; and
bringing the metal oxide composite particles into contact with a solution of Pd to adhere Pd to the surfaces of the oxygen storage component particles and the surfaces of the alumina particles,
wherein the Pd doping ratio of the amount of Pd doped in the oxygen storage component particles to the sum of the amount of Pd doped in the oxygen storage component particles and the amount of Pd adhered to the surfaces of the oxygen storage component particles and the surfaces of the alumina particles is 1% to 60% by mass, both inclusive.

## Patentansprüche

1. Abgasreinigungskatalysator, der eine Katalysatorschicht umfasst, die auf einem Träger ausgebildet ist und eine Sauerstoffspeicherungskomponente enthält, die Ce und Zr, Aluminiumoxid und ein katalytisches Metall enthält, wobei
mehrere primäre Partikel der Sauerstoffspeicherungskomponente und mehrere primäre Partikel des Aluminiumoxids agglomerieren, um jeden der Metalloxidverbundpartikel zu bilden, wobei
das katalytische Metall Pd umfasst, das in den Sauerstoffspeicherungskomponentenpartikeln dotiert ist, um jeden der Sauerstoffspeicherungskomponentenpartikel mit Ce und Zr zu bilden, und an den Oberflächen der mit Pd dotierten Sauerstoffspeicherungskomponentenpartikel freiliegt, **dadurch gekennzeichnet, dass** das katalytische Metall weiterhin Pd umfasst, das an den Oberflächen der Sauerstoffspeicherungskomponentenpartikel und den Oberflächen der Aluminiumoxidpartikel, die nicht mit Pd dotiert sind, anhaftet, und
das Pd-Dotierungsverhältnis der Menge von Pd, die in den Sauerstoffspeicherungskomponentenpartikeln dotiert ist, zu der Summe der Menge von Pd, die in den Sauerstoffspeicherungskomponentenpartikeln dotiert ist, und der Menge von Pd, die an den Oberflächen der Sauerstoffspeicherungskomponentenpartikeln und den Oberflächen der Aluminiumoxidpartikel anhaftet, 1 bis 60 Masseprozent, beide Werte eingeschlossen, beträgt.

2. Abgasreinigungskatalysator nach Anspruch 1, wobei das Pd-Dotierungsverhältnis der Menge von Pd, die in den
Sauerstoffspeicherungskomponentenpartikeln dotiert ist, zu der Summe der Menge von Pd, die in den Sauerstoffspeicherungskomponentenpartikeln dotiert ist, und der Menge von Pd, die an den Oberflächen der Sauerstoffspeicherungskomponentenpartikeln und den Oberflächen der Aluminiumoxidpartikel anhaftet, 5 bis 40 Masseprozent, beide Werte eingeschlossen, beträgt.

3. Abgasreinigungskatalysator nach einem der Ansprüche 1 bis 2, wobei die Metalloxidverbundpartikel ein (Ce+Zr)/Al-Molverhältnis von 0,08 bis 0,97, beide Werte eingeschlossen, aufweisen.

4. Abgasreinigungskatalysator nach einem der Ansprüche 1 bis 3, welcher weiterhin eine Katalysatorschicht umfasst, die zusätzlich zu der die Metalloxidverbundpartikel enthaltenden Katalysatorschicht Rh enthält, wobei die die Metalloxidverbundpartikel enthaltende Katalysatorschicht in einer unteren Schicht näher zur Oberfläche des Trägers als der Rh enthaltenden Katalysatorschicht angeordnet ist.

5. Abgasreinigungskatalysator nach Anspruch 4, wobei die Rh enthaltende Katalysatorschicht weiterhin Pt enthält.

6. Verfahren zum Herstellen eines Abgasreinigungskatalysators, der eine Sauerstoffspeicherungskomponente enthält, die Ce und Zr, Aluminiumoxid und ein katalytisches Metall enthält, wobei das Verfahren die folgenden Schritte umfasst:
Kalzinieren einer Mischung aus mitgefälltem Ce-Zr-Pd-Hydroxid und Aluminiumhydroxid, um Metalloxidverbundpartikel zu erzeugen, die jeweils aus einem Agglomerat von mehreren primären Partikeln der Sauerstoffspeicherungskomponente, die Ce und Zr enthält und mit Pd dotiert ist, und mehreren primären Partikeln von Aluminiumoxid, das nicht mit Pd dotiert ist, bestehen, so dass mindestens ein Teil von Pd an den Oberflächen der primären Partikel der Sauerstoffspeicherungskomponente freiliegt; und in Kontaktbringen der Metalloxidverbundpartikel mit einer Lösung von Pd, um Pd an den Oberflächen der Sauerstoffspeicherungskomponentenpartikel und den Oberflächen der Aluminiumoxidpartikel anhaften zu lassen,
wobei das Pd-Dotierungsverhältnis der Menge von Pd, die in den Sauerstoffspeicherungskomponentenpartikeln dotiert ist, zu der Summe der Menge von Pd, die in den Sauerstoffspeicherungskomponentenpartikeln dotiert ist, und der Menge von Pd, die an den Oberflächen der Sauerstoffspeicherungskomponentenpartikeln und den Oberflächen der Aluminiumoxidpartikel anhaftet, 1 bis 60 Masseprozent, beide Werte eingeschlossen, beträgt.

## Revendications

1. Catalyseur de purification des gaz d'échappement comportant une couche catalytique qui est formée sur un support et contient un composant de stockage d'oxygène contenant du Ce et du Zr, de l'oxyde d'aluminium et un métal catalytique, dans lequel
plusieurs particules primaires du composant de stockage d'oxygène et plusieurs particules primaires de l'oxyde d'aluminium s'agglomèrent pour former chacune des particules composites d'oxyde métallique, dans laquelle le métal catalytique comprend du Pd dopé dans les particules du composant de stockage d'oxygène afin de constituer chacune des particules du composant de stockage d'oxygène avec du Ce et du Zr, et exposé sur les surfaces des particules du composant de stockage d'oxygène dopé au Pd, **caractérisé en ce que** le métal catalytique comprend par ailleurs du Pd collé aux surfaces des particules du composant de stockage d'oxygène et aux surfaces des particules d'oxyde d'aluminium non dopées au Pd, et
le rapport de dopage de Pd de la quantité de Pd dopé dans les particules du composant de stockage d'oxygène au total de la quantité de Pd dopé dans les particules du composant de stockage d'oxygène et à la quantité de Pd collé aux surfaces des particules du composant de stockage d'oxygène et aux surfaces des particules d'oxyde d'aluminium est de 1 % à 60 % par masse, les deux valeurs incluses.

2. Catalyseur de purification des gaz d'échappement de la revendication 1, dans lequel le rapport de dopage de Pd de la quantité de Pd dopé dans les particules du composant de stockage d'oxygène au total de la quantité de Pd dopé dans les particules du composant de stockage d'oxygène et à la quantité de Pd collé aux surfaces des particules du composant de stockage d'oxygène et aux surfaces des particules d'oxyde d'aluminium est de 5 % à 40 % par masse, les deux valeurs incluses.

3. Catalyseur de purification des gaz d'échappement d'une quelconque des revendications 1 à 2, dans lequel les particules composites d'oxyde métallique ont un rapport molaire (Ce + Zr) / Al de 0,08 à 0,97, les deux valeurs incluses.

4. Catalyseur de purification des gaz d'échappement d'une quelconque des revendications 1 à 3, comportant par ailleurs une couche catalytique contenant du Rh en plus de la couche catalytique contenant les particules composites d'oxyde métallique, la couche catalytique contenant les particules composites d'oxyde métallique étant disposée dans une couche inférieure plus proche de la surface du support que la couche catalytique contenant du Rh.

5. Catalyseur de purification des gaz d'échappement de la revendication 4, dans lequel la couche catalytique contenant du Rh contient par ailleurs du Pt.

6. Méthode de fabrication d'un catalyseur de purification des gaz d'échappement qui contient un composant de stockage d'oxygène contenant du Ce et du Zr, de l'oxyde d'aluminium et un métal catalytique, la méthode comprenant les étapes de :
calcination d'un mélange d'hydroxyde de Ce-Zr-Pd coprécipité et d'hydroxyde d'aluminium pour préparer des particules composites d'oxyde métallique chacune composée d'un agglomérat de plusieurs particules primaires du composant de stockage d'oxygène contenant du Ce et du Zr et dopées au Pd et de plusieurs particules primaires d'oxyde d'aluminium non dopées au Pd de sorte qu'au moins une partie du Pd est exposée sur les surfaces des particules primaires du composant de stockage d'oxygène ; et
mise des particules composites d'oxyde métallique en contact avec une solution de Pd pour coller du Pd aux surfaces des particules du composant de stockage d'oxygène et aux surfaces des particules d'oxyde d'aluminium,
dans laquelle le rapport de dopage de Pd de la quantité de Pd dopé dans les particules du composant de stockage d'oxygène au total de la quantité de Pd dopé dans les particules du composant de stockage d'oxygène et à la quantité de Pd collé aux surfaces des particules du composant de stockage d'oxygène et aux surfaces des particules d'oxyde d'aluminium est de 1 % à 60 % par masse, les deux valeurs incluses.
